# EUROPEAN PATENT APPLICATION

(11) **EP 0 854 476 A1**
(43) Date of publication of application: **22.07.1998**
(21) Application number: 96932797.2
(22) Date of filing: 02.10.1996
(51) Int. Cl.: G11B 7/24, G11B 7/26, C03C 10/04

(54) **OPTICAL INFORMATION RECORDING MEDIUM, METHOD OF MANUFACTURING THE MEDIUM, AND TARGET USED FOR MANUFACTURING THE MEDIUM**

(30) Priority: 03.10.1995 JP 256132/95
(71) Applicant: Asahi Kasei Kogyo Kabushiki Kaisha, Osaka-shi, Osaka 530-8205 (JP)
(72) Inventor: SUZUKI, Masaru, Shizuoka 416 (JP); MORISHITA, Noriharu, Shizuoka 416 (JP)
(74) Representative: BROOKES & MARTIN
(86) International application number: JP9602861
(87) International publication number: WO9713246

(57) **Abstract**

A first protective layer (2) provided under the recording layer (3) of a phase changing type optical disk and a second protective layer (4) provided over the recording layer (3) are made of a material containing crystalline glass (for example, a mixture of 80 wt.% ZnS and 20 wt.% crystalline glass). Consequently, the protective layers (2 and 4) are hardly deformed even when the layers (2 and 4) are subjected to thermal loads due to the repetition of recording and erasure, because the heat resistances of the layers (2 and 4) are improved. Therefore, the repeatability of the phase changing type optical disk is improved.

## Description

### Technical Field

The present invention concerns a novel optical information recording medium and, more in particular, it relates to an optical information recording medium capable of recording, reproducing and erasing information at high speed and at high density by the irradiation of light such as a laser beam, and excellent in repeating characteristics.

### Background Art

A so-called phase change type optical disc of using a recording material showing reversible phase change between crystalline material and amorphous material depending on the temperature change and conducting recording/erasing of information by utilizing the above-mentioned property has an advantageous feature capable of erasing old information and, at the same time, recording new information (hereinafter referred to as overwriting) by merely changing the power of a laser beam. As the recording material of the phase change type optical disc capable of overwriting, chalcogen alloys such as In-Se system alloy (Appl. Phys. Lett, Vol. 50, pp 667, 1987), In-Sb-Te alloy (Appl. Phys. Lett., Vol. 50, pp 16, 1987) and Ge-Te-Sb alloy have been employed mainly.

The principle of recording/erasing by the phase change type optical disc described above is as follows. That is, a laser beam at a high power restricted by a lens is irradiated to a recording layer formed with the recording material as described above upon recording, whereby the recording layer is heated to a temperature higher than the melting point and once melted (at about 500 to 600°C), and then the power of the laser beam is lowered. Thus, the recording layer is cooled rapidly into an amorphous state, to take a stable state at a room temperature in which a mark of about 1 µm is usually formed to the recording layer. On the other hand, upon erasure, a laser beam at a low power is irradiated to the mark to elevate temperature to a temperature lower than the melting point, thereby crystallizing the mark in the amorphous state.

In the phase change type optical disc to which a laser beam at a high power is irradiated during recording as described above, a protective layer has been disposed just above the recording layer (between it and the reflective layer) and/or just below thereof (between it and the substrate) in order to prevent thermal damages to the disc substrate or the adhesion layer of low heat resistance. As the material for the protective layer, oxide, carbide, fluoride, sulfide and nitride of metal or half-metal, and a mixture thereof have usually been used.

Among the materials described above, ZnS (zinc sulfide) has been known as a preferred material for the protective layer with a view point of recording/erasing characteristic and adhesion with the recording layer, but it has been found that if the protective layer is actually formed with a material only consisting of ZnS, since crystal grains of ZnS becomes coarser during repeating recording/erasing by overwriting, the heat resistance is insufficient.

That is, the protective layer is liable to suffer from thermal deformation due to solid - liquid volumic expansion of the recording layer or thermal expansion of the protective layer itself caused by melting of the recording layer upon recording. Then, since the thermal deformation occurs during melting of the recording layer, this results in flow of the material for the recording layer in the rotational direction of a disc and the thermal deformation of the protective layer leads to degradation of the repeating characteristic. With the view point as described above, the following five features have been taken into a consideration as the performances required so far for the material of the protective layer:
(1) High deformation strength
(2) High heat resistance
(3) Chemical stability
(4) Transparency in a working wavelength region
(5) High adhesion with a material for the recording layer, and ZnS (zinc sulfide) is preferred for the performances (3), (4) and (5) but can not always be considered as a satisfactory material in view of the strength and the heat resistance (1), (2).

In view of the foregoing situations, there has been proposed, for example, a method of improving the heat resistance of a protective layer by forming the protective layer with a material in which SiO₂ or the like is added to ZnS (refer to Japanese Patent Publication Hei 4-7485) or a method of improving the repeating characteristic by separating the protective layer to be disposed between a recording layer and a reflective layer into two layers, in which one of them is made as a layer consisting of a material comprising ZnS mixed with SiO₂ and the other of them made as a layer consisting only of SiO₂ (refer to Japanese Patent Laid-open Hei 3-263626).

However, even the method proposed above is not satisfactory for the improvement of the problem that the protective layer itself deforms by rapid repeating of heat-ing/cooling for many cycles and the deformation damages the recording layer to increase noise jitter.

The present invention has an object of solving the foregoing problems in the prior art and intends to provide an optical information recording medium which is excellent in the recording/erasing characteristic and also excellent in the repeating characteristic by specifying material for the protective layer.

### Disclosure of the Invention

For solving the foregoing object, the present invention provides an optical information recording medium comprising a transparent substrate, a recording layer which is formed directly or indirectly on the substrate and in which information is recorded and erased by the change of an optical constant due to generation of heat caused by light irradiation, and a protective layer formed just above and/or below the recording layer, wherein the protective layer is constituted with a material containing glass-ceramics.

The present invention further provides an optical information recording medium comprising a transparent substrate, a first protective layer formed on the substrate, a recording layer which is formed on the first protective layer and in which information is recorded and erased by the change of an optical constant due to generation of heat caused by light irradiation, a second protective layer formed on the recording layer and a reflective layer formed on the second protective layer, wherein at least one of the first protective layer and the second protective layer is a heat resistant layer formed with a material containing glass-ceramics.

The present invention further provides an optical information recording medium comprising a transparent substrate, a first protective layer formed on the substrate, a recording layer which is formed on the first protective layer and in which information is recorded and erased by the change of an optical constant due to generation of heat caused by light irradiation, a second protective layer formed on the recording layer, a third protective layer formed on the second protective layer and a reflective layer formed on the third protective layer, wherein the third protective layer is a heat resistant layer formed with a material comprising glass-ceramics.

The heat resistant layer is formed with a material comprising glass-ceramics and not restricted to glass-ceramics in the form of film.

When the protective layer just below the recording layer (first protective layer) is formed as the heat resistant layer, it is preferred to interpose a layer between it and the substrate for improving the adhesion with the substrate.

Glass-ceramics are formed by depositing and growing a number of fine crystals uniformly by reheating glass under a controlled condition. That is, while usual glass and glass material are amorphous, the glass-ceramics being crystallized can be said as crystallized inorganic material rather than glass. Accordingly, the characteristics are considerably different from those of ordinary glass. The features of the glass-ceramics are as follows.
(1) Having high mechanical strength.
(2) Having high softening temperature and high heat resistance attributable to crystallization, compared with ordinary glass materials.
(3) Being dense, having no interior pores and not gas permeable.
(4) Capable of providing transparent material in spite of crystallized products.
(5) Capable of freely controlling heat expansion coefficient.
(6) Capable of providing those of a wide variety of electric characteristics including from those of insulating property to those showing semiconductor characteristics.

As described above, glass-ceramics have more suitable characteristics as a protective layer of a phase change type optical disc compared with ordinary glass materials.

Various systems have been known for such glass-ceramics and basic systems are shown in the following Table 1.

**Table 1**

| | |
|---|---|
| Silicate glass | Li₂O-SiO₂, Na₂O-MgO-SiO₂, Na₂O-BaO-SiO₂ K₂O-MgO-SiO₂, Li₂O-K₂O-ZnO-SiO₂, Li₂O-MgO-ZnO-SiO₂, PbO-BaO-SiO₂, PbO-Nb₂O₅-SiO₂, Li₂O-Ga₂O₃-SiO₂, CdO-In₂O₃-SiO₂, K₂-TiO₂-SiO₂ |
| Alumino-silicate glass | Li₂O-Al₂O₃-SiO₂, Na₂O-Al₂O₃-SiO₂, Li₂O-K₂O-Al₂O₃-SiO₂, MgO-Al₂O₃-SiO₂, CaO-Al₂O₃-SiO₂, BaO-Al₂O₃-SiO₂, PbO-Al₂O₃-SiO₂, MnO-Al₂O₃-SiO₂, FeO-Al₂O₃-SiO₂, PbO-Al₂O₃-SiO₂, MnO-Al₂O₃-SiO₂, FeO-Al₂O₃-SiO₂, CoO-Al₂O₃-SiO₂, CdO-Al₂O₃-SiO₂, CaO-MgO-Al₂O₃-SiO₂, CaO-BaO-Al₂O₂-SiO₂, Li₂O-MgO-Al₂O₃-SiO₂, Li₂O-CaO-Al₂O₃-SiO₂ K₂O-MgO-Al₂O₃-SiO₂, Na₂O-MgO-Al₂O₃-SiO₂, Na₂O-CaO-Al₂O₃-SiO₂, Li₂O-ZnO-Al₂O₃-SiO₂, Na₂O-CaO-MgO-Al₂O₃-SiO₂ |
| Borate glass | PbO-ZnO-B₂O₃, BaO-Al₂O₃-SiO₂, Bi₂O₃-PbO-B₂O₃, CdO-In₂O₃-B₂O₃ |
| Boro-silicate glass | Al₂O₃-B₂O₃-SiO₂-ZnO-B₂O₃-SiO₂, PbO-Al₂O₃-SiO₂, PbO-ZnO-B₂O₃-SiO₂ |
| Phospho-silicate glass | MgO-P₂O₅-SiO₂, CaO-Al₂O₃-P₂O₅-SiO₂ |

In usual glass-ceramics, crystallization is promoted by adding TiO₂, ZrO₂, Fe₃O₂, V₂O₅, NiO, Cr₂O₃, fluoride, sulfide or a noble metal such as Pt or Au as a nucleating agent to glass comprising the basic systems described above. Since the ability of the nucleating agent varies depending on the material system or the composition, an appropriate amount optimal to a system may be added.

Among the basic systems described above, glass-ceramics contained in the material forming the heat resistant layer in the optical information recording medium of the present invention preferably contain SiO₂ and Al₂O₃,

Glass-ceramics contained in the material forming the heat resistant layer preferably contain SiO₂, Al₂O₃ and Li₂O.

Glass-ceramics contained in the material forming the heat resistant layer preferably contain SiO₂, Al₂O₃ and MgO.

Glass-ceramics contained in the material forming the heat resistant layer preferably contain SiO₂, Al₂O₃ and MgO and/or ZnO.

The glass-ceramics preferably contain a nucleating agent further. The nucleating agent is selected properly from the compounds described above which have been used so far as the nucleating agent for glass-ceramics depending on the composition of glass to be crystallized. In the glass-ceramics of a composition containing SiO₂ and Al₂O₃, TiO₂ or ZrO₂ is used preferably as the nucleating agent, and one or both of them is incorporated into glass to be crystallized, for example, within a range of less than 15 mol%.

Glass ceramics contained in the material forming the heat resistant layer is preferably at least either one of an Li₂O-Al₂O₃-SiO₂ system and a cordierite system.

As the Li₂O-Al₂O₃-SiO₂ system glass-ceramics, there can be mentioned those obtained by heating an Li₂O-Al₂O₃-SiO₂ system glass with less Li₂O content and more Al₂O₃ content. For the glass-ceramics, those of crystal phase either of a β-quartz solid solution or a β-spodumene solid solution are obtained depending on the condition of the heat treatment, any of which may be used. Further, the β-quartz solid solution is transparent at a wavelength of visible light, while the β-spodumene solid solution is semitransparent or not transparent.

As the composition of the glass-ceramics, there can be mentioned those containing 1-10 mol% Li₂O, 15 to 40 mol% of Al₂O₃, and 40 to 60 mol% SiO₂.

The glass-ceramics are particularly excellent in the heat resistance probably because lithium alumino silicate highly resistant to thermal shock is deposited by crystallization.

Further, glass-ceramics of a composition incorporating MgO and/or ZnO in Li₂O-Al₂O₃-SiO₂ has a moderate viscosity-temperature curve.

The cordierite system glass-ceramics have cordierite (2MgO 2Al₂O₃ 5SiO₂) as the main crystal phase and contain 1 to 15 mol % MgO, 15 to 40 mol% Al₂O₃ and 40 to 60 % SiO₂. The cordierite system glass-ceramics are also excellent in heat resistance.

Among the basic systems described above, preferred systems other than the Li₂O-Al₂O₃-SiO₂ system and the cordierite system described above can include Na₂O-Al₂O₃-SiO₂ system, Na₂O-CaO-MgO-SiO₂ system, PbO-ZnO-B₂O₃ system and ZnO-B₂O₃-SiO₂ system.

As described above, the glass-ceramics have the required characteristics (1) and (2) among those described above for the protective layer material and it is preferred to use a mixture of glass-ceramics and a chalcogenide compound, particularly, ZnS (zinc sulfide) as the material for the protective layer also for providing excellent characteristics (3) to (5). That is, when a Te or Se series compound (chalcogenide) is used as the recording layer, since ZnS has excellent adhesion with the recording layer, all the characteristics required for the material of the protective layer can be satisfied by using the mixture of ZnS and glass-ceramics of high heat resistance as the material for the protective layer.

Since glass-ceramics contain various kinds of molecules, it is difficult to express each of the materials constituting the glass-ceramics on the basis of mol% as the method of indicating the mixing ratio for the mixture of ZnS and glass-ceramics, so it is indicated in this specification by the weight ratio of ZnS and glass-ceramics to be mixed, namely, on the basis of weight % (wt%).

In the optical information recording medium of the present invention, if the material constituting the heat resistant layer just above and below the recording layer (protective layer) is a mixture of ZnS and glass-ceramics, the content of the glass-ceramics is preferably more than 5 wt% and less than 50 wt% based on the entire material. The heat resistance of the protective layer is poor if the content of the glass-ceramics is less than 5 wt%, whereas adhesion with the recording layer is lowered if the content exceeds 50 wt%. In the actual production, the content is further preferably more than 10 wt% and less than 40 wt% considering scattering or the like.

Further, in the optical information recording medium according to the present invention, for the material forming the heat resistant layer formed just above and below the recording layer preferably contains glass-ceramics of at least one of Li₂O-Al₂O₃-SiO₂ system and the cordierite system, and a chalcogen compound (particularly, ZnS). In a case of an optical information recording medium having the third protective layer, the first protective layer and the second protective layer may be formed with a material not containing glass-ceramics but comprising ZnS as the main ingredient.

In the structure having the third protective layer of the optical information recording medium according to the present invention, since the second protective layer most suffering from thermal load upon recording/erasing is separated into two layers and the heat resistance is provided to the third protective layer, the repeating characteristic can be improved further by sharing the function between the second protective layer and the third protective layer by using a material having a high adhesion property with the recording layer for the second protective layer.

Further, since the first protective layer and the second protective layer are in direct contact with the recording layer and, accordingly, required for adhesion with the recording layer, it is preferred to constitute them with a material comprising ZnS as the main ingredient and for instance, it is preferred to use a material formed by mixing, for example, glass-ceramics or SiO₂ with ZnS.

The thickness of the second protective layer and the third protective layer is made so as to obtain desired optical characteristic and sensitivity. Generally, it is preferred to increase the thickness of the third protective layer for improving the repeating characteristic and to increase the thickness of the second protective layer for improving the recording sensitivity.

For making improvement for the recording sensitivity and the repeating characteristic compatible, the thickness of the second protective layer is preferably more than 1 nm and less than 50 nm and, more preferably, more than 1 nm and less than 20 nm. The thickness of the third protective layer is generally more than 1 nm and less than 300 nm in view of the recording sensitivity and the optical characteristic and according to the experiment made by the present inventors, et al, it has been confirmed that a preferred range is from 10 nm to 50 nm under the working conditions of a semiconductor laser at a linear velocity of 11 m/s, a recording sensitivity of less than 22 mW and a wavelength at 780 nm.

The thickness of the first protective layer is preferably more than 80 nm and less than 400 nm in view of the reflectance as the optical information recording medium, the heat resistance of the substrate and the productivity, irrespective of the presence or absence of the third protective layer.

Further, the present invention provides a process for producing an optical information recording medium according to the present invention in which the heat resistant layer is formed by sputtering using a sintering product containing glass-ceramics as a target.

Further, the present invention provides a process for producing an optical information recording medium according to the present invention, wherein the heat resistant layer is formed by sputtering using as a target a sinteting product containing glass-ceramics glass and chalcogen compounds in which the content of the glass-ceramics is from 5 to 50% by weight.

Further, the present invention provides a target for forming a thin film comprising a sintering product containing glass-ceramics and a chalcogen compound.

Generally, as a method of forming a protective layer of an optical information recording medium, a vapor deposition method and a sputtering method have been known and the sputtering method has usually been utilized often for the mass production facility since the sputtering method is excellent over the vapor deposition method in view of the productivity. As a method of forming a film made of a mixture comprising two or more ingredients by the sputtering method, a co-sputtering method of sputtering each of constituent materials from each of targets, or a method of sputtering from a target formed by powder-mixing and sintering each of the materials has been often utilized.

On the other hand, in a case of forming a protective layer comprising glass-ceramics or a mixture of a chalcogen compound (for example, ZnS) and glass-ceramics, it is preferred to use, as a target, glass-ceramics itself or each of ingredients constituting the glass-ceramics firmly bonded together. That is, when a sintering product in which the composition for each of materials constituting the glass-ceramics and the ratio of ZnS, if contained, to the glass-ceramics are formed as predetermined is used as a target, a protective layer obtained has the predetermined composition and ratio.

Further, the present invention provides an optical information recording medium comprising a transparent substrate, a recording layer which is formed directly or indirectly on the substrate and in which information is recorded and erased by the change of an optical constant due to generation of heat by light irradiation, and a protective layer formed just above or just below the recording layer, wherein the protective layer is a heat resistant layer of a composition containing SiO₂ and Al₂O₃.

Further, the present invention provides an optical information recording medium comprising a transparent substrate, a first protective layer formed on the substrate, a recording layer which is formed on the first protective layer and in which information is recorded and erased by the change of an optical constant due to generation of heat by light irradiation, a second protective layer formed on the recording layer and a reflective layer formed on the second protective layer, wherein at least one of the first protective layer and the second protective layer is a heat resistant layer of a composition containing SiO₂ and Al₂O₃.

The heat resistant layer is preferably of a composition further containing a chalcogen compound.

Further, the present invention provides an optical information recording medium comprising a transparent substrate, a first protective layer formed on the substrate, a recording layer which is formed on the first protective layer and in which information is recorded and erased by the change of an optical constant due to generation of heat by light irradiation, a second protective layer formed on the recording layer, a third protective layer formed on the second protective layer, and a reflective layer formed on the third protective layer, wherein the third protective layer is a heat resistant layer of a composition further containing SiO₂ and Al₂O₃.

The heat resistant layer is preferably of a composition further containing Li₂O or MgO.

Among the heat resistant layer, those containing Li₂O are preferably of a composition further containing MgO and/or ZnO.

The heat resistant layer is preferably of a composition further containing a nucleating agent for glass-ceramics.

The heat resistant layer of such a composition can be formed by forming a film of glass-ceramics of a corresponding composition, for example, by a sputtering method but it may also be formed by forming the powder for each of the ingredient as it is or as a sintering product into a film, for example, by a sputtering method.

As the material for the recording layer suitable to the optical information recording medium according to the present invention, Te or Se-based alloys are preferred, for example, Sb-Te-Ge, In-Sb-Te, In-Se-Tl, Ge-Te-Sn-Au, Sb-Te-Ge-Pd, Sb-Te-Ge-Pt and Sb-Te-Ge-Nb. Among them, since an Sb-Te-Ge alloy or an alloy system based on Sb-Te-Ge alloy and with addition of a fourth element has various crystallizing rates depending on the composition, it can cope with the required rotational speed of a medium (disc) by selecting the composition of the alloy. Thus, in the layer constitution of the optical information recording medium of the present invention, since the thickness for the first, second and third protective layers can be varied over a wide range, it is preferred to use the Sb-Te-Ge alloy or an alloy system based on Sb-Te-Ge alloy with addition of the fourth element as the material for the recording layer.

The thickness of the recording layer is determined depending on the reflectance and the recording sensitivity required for the optical information recording medium, and the thickness of the recording layer is preferably more than 15 nm and less than 120 nm as a phase change type optical disc undergoing recording/erasing by a disc drive generally used at present.

As the material for the reflective layer, metals such as Al, Cr, Ni, Au, Ti, Zr, Hf, Si and Mg and alloys thereof are used preferably with a view point of light reflectivity and heat conductivity. Particularly, Al or Au based alloy system is preferred, and an alloy system based on Al and, with addition of Cr, Ti, Zr, Hf, Si or Cu at a ratio of 0.5 at% to 10 at% is preferred in view of the cost.

The thickness of the reflective layer may be within such a range as capable of effectively dissipating heat generated in the recording layer and capable of providing an effect of improving the contrast ratio during reproduction, and the thickness is preferably from 30 nm to 300 nm. The effect of improving the contrast during reproduction is lowered if the thickness is less than 30 nm, while the laser power required for heating the recording layer is increased if the thickness is more than 300 nm, which is not desirable.

It is preferred to dispose a synthetic resin layer on the reflective layer in order to protect the reflective layer and provide durability. As the material, UV (Ultra Violet ray) curable resin (urethane, acryl, silicone or polyester type) or hot-melt type adhesive can be used. The thickness of the resin layer is preferably more than 5 µm and less than 50 µm although it is different depending on whether the optical information recording medium is used for both faces by bonding or used only for one face.

As the substrate, those used customarily as the substrate for optical information medium can be used, and polycarbonate, glass or the like having satisfactory optical characteristic, high mechanical strength and excellent dimensional stability is suitable.

In the optical information recording medium according to the present invention, since the protective layer is constituted with a material containing glass-ceramics, the heat resistance of the protective layer is improved to reduce the thermal deformation, degradation of the protective layer against repeating recording/erasing can be prevented, to obtain stable repeating characteristics for a laser beam over a wide power region.

### Brief Explanation of the Drawings

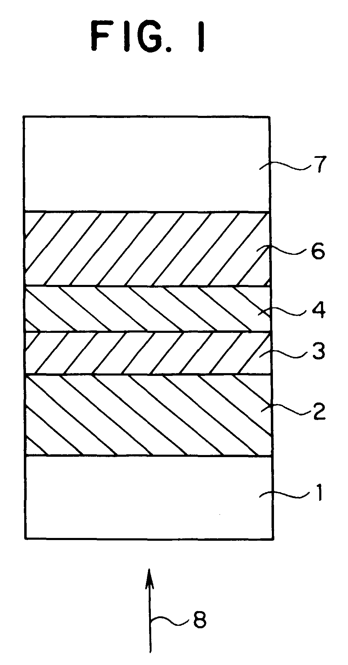

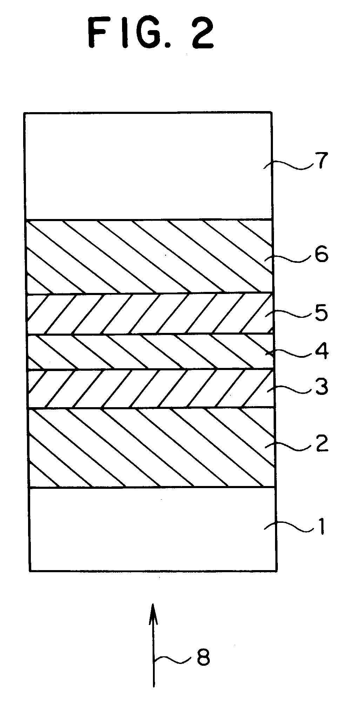

Fig. 1 is a cross sectional view illustrating a layer structure (4-layered structure having protective layers on both sides of a recording layer and a reflective layer) of an optical information recording medium in one preferred embodiment according to the present invention; and Fig. 2 is a cross sectional view illustrating a layer structure (5-layered structure having protective layers on both sides of a recording layer, a third protective layer and a reflective layer) of an optical information recording medium in another preferred embodiment according to the present invention.

### Best Mode for Practicing the Invention

Preferred embodiments of the present invention will be explained with reference to examples and comparative examples. In the following examples and the comparative examples, explanation is to be made for a phase change type optical disc using a phase change type recording material as a recording layer, but the present invention is applicable also to other optical information recording media than the phase change type optical disc.

### Example 1

As shown in Fig. 1, a first protective layer 2, a recording layer 3, a second protective layer 4, a reflective layer 6 and a UV-curable resin layer 7 were formed in this order on a substrate 1 made of polycarbonate having 1.2 mm thickness and grooves formed previously at 1.6 µm pitch, by the following procedures.

At first, a target comprising a sintering product of 70 wt% ZnS and 30 wt% glass-ceramics (P-9608 (Corning glass Code No. 9608), manufactured by Iwaki Glass Co., Li₂O - Al₂O₃- SiO₂ system) was used and the first protective film 2 was formed to 180 nm thickness on the substrate 1 by an RF sputtering method. The glass-ceramics are β-spodumene solid-solution type comprising a composition of SiO₂ : 69.7 %, Al₂O₃ : 18.3 %, Li₂O : 5.4 %, TiO₂: 4.3 % and MgO : 2.3 %.

Then, an Sb-Te-Ge based alloy film was formed as the recording layer 3 on the first protective layer 2 to a thickness of 25 nm by an RF sputtering method. Then, the second protective layer 4 comprising 70 wt% ZnS and 30 wt% glass-ceramics was formed to a thickness of 20 nm by the same method as that for the first protective layer 2. The reflective layer 6 made of an Al alloy was formed to 200 nm thickness on the second protective layer by an RF sputtering method. Further, UV-curable acrylic resin was coated to 10 µm thickness on the reflective layer 6 by a spin coating method and cured by irradiation of ultraviolet rays, to form the UV-curable resin layer 7.

The thus obtained two sheets of discs were bonded to each other on the side of the UV-curable resin layers 7 by means of a hot-melt adhesive, to prepare a phase change type optical disc used at both faces.

A semiconductor laser 8 (incident light) at 1 W power was irradiated to the surface of the substrate of the resultant phase change type optical disc to initialize an area to be used. While rotating the thus initialized optical disc, the dynamic measurement was conducted as described below.

The laser used for the measurement is a semiconductor laser at a wavelength of 830 nm, and the number of aperture of the objective lens is 0.5. The linear speed was set to about 11 m/s the semiconductor laser was modulated under the conditions of a recording frequency at 6.9 MHz (duty ratio: 50%), a peak power (recording power) at 10 - 20 mW and a bias power (erasing power) at 5 - 10 mW, and, after recording in the overwrite mode in one identical track for 100 cycles, reproduction was conducted at a reproduction power of 1.5 mW, and the C/N ratio of the reproduced light was measured by a spectrum analyzer.

Further, after the measurement of the C-N ratio, a semiconductor laser modulated under the same conditions described above at a frequency of 3.7 MHz (duty ratio: 50%) was irradiated to one identical track and an erasing ratio of the previously recorded signals was measured.

As a result, the C/N ratio had a value not less than 50 dB enough for practical use at a peak power of not lower than 14 mW, and the erasing ratio had a value not less than 20 dB enough for practical use at a bias power within a range from 7 to 10 mW.

Then, for examining repeating characteristic of the optical disc, a semiconductor laser at a wave length of 780 nm was modulated under the conditions of a peak power at 18 mW, and a bias power at 9 mW and a pulse width of 40 ns, a random pattern was recorded repeatingly at a linear velocity of 7.5 m/s. A bit error rate after repeating the recording for 500,000 cycles was not more than 3 x 10⁻⁵, to obtain a satisfactory result.

### Example 2

A phase change type optical disc was prepared in the same manner as in Example 1 except for replacing the constituent material for the first protective layer 2 and the second protective layer 4 with 80 wt% ZnS and 20 wt% glass-ceramics (NEOCERAM N-0: Li₂O-AL₂O₃ - SiO₂ system manufactured by Nippon Electric Glass Co.). The glass-ceramics were β-quartz solid-solution type and comprised a composition of SiO₂: 63.0%, Al₂O₃:25.0%, Li₂O: 4.9%, TiO₂:4.3%, MgO: 1.0%, and P₂O₅: 1.8%.

When the C/N ratio was measured by the same method as in Example 1, the peak power at which the C/N ratio of the optical disc exceeds 50 dB was about 14 mW like that in

### Example 1.

Further, for examining the repeating characteristic of the optical disc, when evaluation was made by the same method as in Example 1, the bit error rate after repeating recording for 500,000 cycles, was less than 3 x 10⁻⁵, to obtain a satisfactory result.

### Example 3

A phase change type optical disc was prepared in the same procedures as those in Example 1 except for using a mixture of 80 wt% ZnS and 20 wt% glass-ceramics (same as in Example 1) as the constituent material for the first protective layer 2 and constituting the second protective layer 4 only with the glass-ceramics (same as in Examples 1).

When the C/N ratio was measured by the same method as in Example 1, the peak power at which the C/N ratio of the optical disc exceeds 50 dB was about 15 mW.

For examining the repeating characteristic of the optical disc, when evaluation was made by the same method as in Example 1, the bit error rate after the repeating recording for 500,000 cycles was less than 1 x 10⁻⁵, to result in a range capable of correcting errors sufficiently.

### Example 4

A phase change type optical disc was prepared in the same procedures as those in Example 1 except for using a mixture of 80 wt% ZnS and 20 wt% glass-ceramics (cordierite system; main crystal phase: 2MgO·2Al₂O₃·5SiO₂, composition/SiO₂: 42.8%, Al₂O₃ : 30.2%, MgO : 14.0%, TiO₂: 13.0% and MgO : 1.0%) for the constituent material of the first protective layer 2 and the second protective layer 4.

When the C/N ratio was measured by the same method as in Example 1, the peak power at which the C/N ratio of the optical disc exceeds 50 dB was about 15 mW.

For examining the repeating characteristic of the optical disc, when evaluation was made by the same method as in Example 1, the bit error rate after repeating recording for 500,000 cycles was less than 5 x 10⁻⁵, to obtain a satisfactory result.

### Comparative Example 1

A phase change type optical disc was prepared in the same procedures as those in Example 1 except for using a mixture of 80 mol% ZnS and 20 mol% SiO₂ for the constituent material of the first protective layer 2 and the second protective layer 4.

When the C/N ratio was measured by the same method as in Example 1, the peak power at which the C/N ratio of the optical disc exceeds 50 dB was about 14 mW.

For examining the repeating characteristic of the optical disc, when evaluation was made by the same method as in Example 1, the bit error rate after the repeating recording for 500,000 cycles was more than 1 x 10⁻², and the data could not be reproduced even by error correction.

### Comparative Example 2

A phase change type optical disc was prepared in the same procedures as those in Example 1 except for using a mixture of 80 wt% of ZnS and 20 wt% of commercially available usual (not crystallized) glass (7913: manufactured by Iwaki Glass Co.). The glass used in this comparative example was a usual not crystallized glass which was in an amorphous state also in a film obtained by sputtering.

For examining the repeating characteristic of the optical disc, when evaluation was made by the same method as in Example 1, the bit error rate after repeating recording for 500,000 cycles, was more than 1 x 10⁻², and the data could not be reproduced even by error correction.

### Example 5

As shown in Fig. 2, a first protective layer 2, a recording layer 3, a second protective layer 4, a reflective layer 5, a third protective layer 6 and a UV-curable resin layer 7 were formed in this order on a substrate 1 made of polycarbonate having 1.2 mm thickness and previously formed with grooves at a pitch of 1.6 µm by the following procedures.

At first, a target comprising 80 mol% ZnS and 20 mol% SiO₂ was used and the protective film 2 was formed to 180 nm on the substrate 1 by RF sputtering method.

Then, an Sb-Te-Ge based alloy film was formed as the recording layer 3 on the first protective layer 2 to a thickness of 25 nm by an RF sputtering method. Then, the second protective layer 4 comprising 80 mol% ZnS and 20 mol% SiO₂ was formed to a thickness of 8 nm by the same method as that for the first protective layer 2. As a third protective layer 5, layer consisting only of glass-ceramics (same as in Example 1) was formed to a thickness of 20 mm.

A reflective layer 6 made of an Al alloy was formed to 150 nm thickness on the third protective layer 5 by an RF sputtering method. Further, a UV-curable acrylic resin layer 7 was coated to 10 µm thickness on the reflective layer 6 by a spin coating method and cured by irradiation of ultraviolet-rays.

The thus obtained two sheets of discs were bonded to each other on the side of the UV-curable resin layer 7 by means of a hot-melt adhesive, to prepare a phase change type optical disc used for both faces.

When the C/N ratio was measured by the same method as in Example 1, the peak power at which the C/N ratio of the optical disc exceeds 50 dB was about 15 mW.

Further, for examining the repeating characteristic of the optical disc, when evaluation was made by the same method as in Example 1, the bit error rate after the repeating recording for 500,000 cycles was 5 x 10⁻⁵, to result in a range capable of correcting errors sufficiently.

### Example 6

A phase change type optical disc was prepared in the same procedures as those in Example 5 except for using a mixture of 80 wt% ZnS and 20 wt% glass-ceramics (same as in Example 1) as the constituent material for the first protective layer 2 and the second protective layer 4.

When the C/N ratio was measured by the same method as in Example 1, the peak power at which the C/N ratio of the optical disc exceeds 50 dB was about 15 mW like that in Example 5.

Further, for examining the repeating characteristic of the optical disc, when evaluation was made by the same method as in Example 1, bit error rate after repeating recording for 500,000 cycles was not more than 1 x 10⁻⁵, to result in a range capable of correcting errors sufficiently.

### Comparative Example 3

A phase change type optical disc was prepared in the same procedures as those in Example 5 except for using a mixture of 80 mol% ZnS and 20 mol% SiO₂ as the constituent material for the first protective layer 2 and the second protective layer 4 and constituting the third protective layer 5 only with the SiO₂.

When the C/N ratio was measured by the same method as in Example 1, the peak power at which the C/N ratio of the optical disc exceeds 50 dB was about 15 mW like that in Example 5.

Further, for examining the repeating characteristic of the optical disc, when evaluation was made by the same method as in Example 1, the bit error rate after the repeating recording for 500,000 cycles was 8 x 10⁻⁴,and the value was a limit value capable of reproducing the data by error correction.

### Industrial Applicability

As has been described above, according to the optical information recording medium of the present invention, since thermal deformation of the protective layer film accompanying recording/erasing can be prevented by using a material comprising glass-ceramics or a material containing glass-ceramics as a constituent material for the protective layer, it is possible to obtain an optical information recording medium with improved repeating characteristic, having high reliability for recorded data and excellent in signal quality.

Particularly, when a protective layer formed just above and below the recording layer is formed with a material consisting not only of glass-ceramics but also of ZnS, since adhesion with the recording layer is increased, the effect of improving the repeating characteristic is further enhanced.

Particularly, in an optical information recording medium having a third protective layer, since the second protective layer most suffering from thermal load upon recording/erasing is separated into two layers and the heat resistance of the third protective layer on the side of the reflective layer is made higher, the effect of improving the repeating characteristic is further enhanced by using a material having a high adhesion with the recording layer for the second protective layer on the side of the recording layer.

## Claims

1. An optical information recording medium comprising a transparent substrate, a recording layer which is formed directly or indirectly on the substrate and in which information is recorded and erased by the change of an optical constant due to generation of heat by light irradiation, and a protective layer formed just above or just below the recording layer, wherein the protective layer is a heat resistant layer formed with a material containing glass-ceramics.

2. An optical information recording medium comprising a transparent substrate (1), a first protective layer (2) formed on the substrate, a recording layer (3) which is formed on the first protective layer and in which information is recorded and erased by the change of an optical constant due to generation of heat by light irradiation, a second protective layer (4) formed on the recording layer and a reflective layer (6) formed on the second protective layer (4), wherein at least one of the first protective layer and the second protective layer is a heat resistant layer formed with a material containing glass-ceramics.

3. An optical information recording medium comprising a transparent substrate, a first protective layer formed on the substrate, a recording layer which is formed on the first protective layer and in which information is recorded and erased by the change of an optical constant due to generation of heat by light irradiation, a second protective layer formed on the recording layer, a third protective layer (5) formed on the second protective layer, and a reflective layer formed on the third protective layer, wherein the third protective layer is a heat resistant layer formed with a material comprising glass-ceramics.

4. An optical information recording medium as defined in any one of claims 1 to 3, wherein the glass-ceramics contained in the material for forming the heat resistant layer contain SiO₂ and Al₂O₃.

5. An optical information recording medium as defined in any one of claims 1 to 3, wherein the glass-ceramics contained in the material for forming the heat resistant layer contain SiO₂, Al₂O₃ and Li₂O.

6. An optical information recording medium as defined in any one of claims 1 to 3, wherein the glass-ceramics contained in the material for forming the heat resistant layer contain SiO₂, Al₂O₃ and MgO.

7. An optical information recording medium as defined in any one of claims 1 to 3, wherein the glass-ceramics contained in the material for forming the heat resistant layer contain SiO₂, Al₂O₃, Li₂O and MgO and/or ZnO.

8. An optical information recording medium as defined in any one of claim 4 to 7, wherein the glass-ceramics further contain a nucleating agent.

9. An optical information recording medium as defined in any one of claims 1 to 3, wherein the glass-ceramics contained in the material for forming the heat resistant layer are at least one of an Li₂O - Al₂O₃ - SiO₂ system and a cordierite system.

10. An optical information recording medium as defined in claim 1 or 2, wherein the glass-ceramics contained in the material for forming the heat resistant layer is at least one of an Li₂O - Al₂O₃ - SiO₂ system and a cordierite system, and a material for forming the heat resistant layer contains a chalcogen compound.

11. A process for producing an optical information recording medium as defined in any one of claims 1 to 9, wherein the heat resistant layer is formed by sputtering using, as a target, a sintering product containing glass-ceramics.

12. A process for producing an optical information recording medium as defined in claim 10, wherein the heat resistant layer is formed by sputtering using, as a target, a sintering product containing glass-ceramics and a chalcogen compound in which the content of the glass-ceramics is from 5 to 50 % by weight.

13. A target for forming a thin film comprising a sintering product containing glass-ceramics.

14. A target for forming a thin film comprising a sintering product containing glass-ceramics arid a chalcogen compound.

15. An optical information recording medium comprising a transparent substrate, a recording layer which is formed directly or indirectly on the substrate and in which information is recorded and erased by the change of an optical constant due to generation of heat by light irradiation, and a protective layer formed just above or just below the recording layer, wherein the protective layer is a heat resistant layer having a composition containing SiO₂ and Al₂O₃.

16. An optical information recording medium comprising a transparent substrate, a first protective layer formed on the substrate, a recording layer which is formed on the first protective layer and in which information is recorded and erased by the change of an optical constant due to generation of heat by light irradiation, a second protective layer formed on the recording layer and a reflective layer formed on the second protective layer, wherein at least one of the first protective layer and the second protective layer is a heat resistant layer having a composition containing SiO₂ and Al₂O₃.

17. An optical information recording medium as defined in claim 15 or 16, wherein the heat resistant layer has a composition further containing a chalcogen compound.

18. An optical information recording medium comprising a transparent substrate, a first protective layer formed on the substrate, a recording layer which is formed on the first protective layer and in which information is recorded and erased by the change of an optical constant due to generation of heat by light irradiation, a second protective layer formed on the recording layer, a third protective layer formed on the second protective layer, and a reflective layer formed on the third protective layer, wherein the third protective layer is a heat resistant layer having a composition containing SiO₂ and Al₂O₃.

19. An optical information recording medium as defined in any one of claims 15 to 18, wherein the heat resistant layer has a composition further containing Li₂O.

20. An optical information recording medium as defined in any one of claims 15 to 18, wherein the heat resistant layer has a composition further containing MgO.

21. An optical information recording medium as defined in claim 19, wherein the heat resistant layer has a composition further containing MgO and/or ZnO.

22. An optical information recording medium as defined in any one of claims 15 to 21, wherein the heat resistant layer has a composition further containing a nucleating agent for glass-ceramics.
